# EUROPÄISCHE PATENTSCHRIFT

(11) **EP 2 125 581 B1**
(45) Veröffentlichungstag und Bekanntmachung des Hinweises auf die Patenterteilung: **02.06.2010**
(21) Anmeldenummer: 07819367.9
(22) Anmeldetag: 26.10.2007
(51) Int. Cl.: B65G 19/02, B65G 9/00

(54) **FÖRDERMITTEL FÜR EINE HÄNGEFÖRDEREINRICHTUNG**
CONVEYING MEANS FOR AN OVERHEAD CONVEYER
MOYEN DE TRANSPORT POUR UN DISPOSITIF DE TRANSPORT EN SUSPENSION

(30) Priorität: 16.02.2007 DE 102007007837
(43) Veröffentlichungstag der Anmeldung: 02.12.2009
(73) Patentinhaber: RSL Logistik GmbH & Co. KG, 86899 Landsberg (DE)
(72) Erfinder: WIEDEMANN, Bernhard, 86928 Hofstetten (DE); SCHÖNENBERGER, Rolf, 86899 Labdsberg/Lech (DE)
(74) Vertreter: Tiesmeyer, Johannes
(86) Internationale Anmeldenummer: PCT/EP2007/009323
(87) Internationale Veröffentlichungsnummer: WO 2008/098596

(56) Entgegenhaltungen:
- EP-A- 0 062 452
- DE-A1- 10 236 449

## Beschreibung

Die Erfindung betrifft ein Fördermittel für eine Hängefördereinrichtung, welches wenigstens einen an einer Führungsschiene hängend bewegbaren Laufkörper hat, der einen Lastaufnahmekörper mit einem Anhängabschnitt für Haken von Förderguthaltern, z. B. Kleiderbügeln, aufweist.

Derartige Fördermittel sind z. B. als sog. Einzelbügelträger oder auch als Mehrfachbügelträger bekannt. Beispiele für Einzelbügelträger finden sich in der DE 198 16 688 A1 und der EP 0 623 497 A1. Beispiele für Mehrfachbügelträger finden sich in der EP 0 516 969 B1 und in der DE 299 09 959 U1.

Ein typisches Einsatzgebiet für solche Fördermittel ist der Transport von Kleidungsstücken in Bekleidungswarenlagem, Wäschereien usw. Die Kleidungsstücke hängen dabei an Kleiderbügeln, die mit ihren Haken an den Anhängabschnitten der Fördermittel hängen. Bei den bekannten Einzelbügelträgem hat jeder Laufkörper ein Laufrollenpaar, wobei die auf einer gemeinsamen Drehachse angeordneten Laufrollen von einem im Förderbetrieb normalerweise im Wesentlichen vertikal ausgerichteten länglichen Rahmenteil zu einander entgegengesetzten Seiten abstehen. Die Laufkörper sind einseitig mit jeweils einer Laufrolle an der Führungsschiene anzuhängen. Zu den Einzelheiten derartiger Laufkörper und damit ausgerüsteter Hängefördereinrichtungen kann z. B. auf die EP 0 623 497 A1 und die DE 198 16 688 A1 verwiesen werden. Die daraus bekannten Einzelfördermittel, also Fördermittel für den Einzeltransport von Förderguthaltern und daran befindlicher Ware, weisen an ihren unteren Enden einen jeweiligen Haken auf, an dem ein Haken eines Förderguthalters eingehängt werden kann. Bei bestimmungsgemäßer Anordnung eines solchen Einzelfördermittels an der Führungsschiene ist der den Anhängabschnitt bildende Haken in einer zur Schienenlaufrichtung parallelen oder ggf. tangentialen vertikalen Ebene in Vorwärtsrichtung oder Rückwärtsrichtung orientiert. Das Einhängen eines Förderguthalters in den hakenförmigen Anhängabschnitt des Einzelfördermittels kann in Schienenlaufrichtung nur von einer Seite des Einzelfördermittels erfolgen, nämlich nur von der Seite, zu der das Hakenmaul hin offen ist. Der Hakenrücken bildet diesbezüglich eine Störkontur, die den Anhängabschnitt von der anderen Seite her unzugänglich macht.

Bei den Mehrfachfördermitteln gemäß der EP 0 516 969 B1 und der DE 299 09 959 U1 sind zwei hintereinander an einer Führungsschiene hängend bewegbare Laufkörper und ein die Laufkörper verbindendes Verbindungselement vorgesehen, wobei dieses normalerweise in einer vertikalen Mittenebene zwischen diesen Laufkörpern liegende Verbindungselement den Lastaufnahmekörper mit dem Anhängabschnitt für Haken von Förderguthaltern, z. B. Kleiderbügeln, bildet. Dabei stellt das Verbindungselement unmittelbar den Anhängabschnitt dar. Das Verbindungselement ist eine Verbindungsstange, die an ihren Enden mit den Laufkörpern verbunden ist. Die Verbindungsstange ist lang genug, um mehrere Kleiderbügel nebeneinander aufzunehmen. Derartige Fördermittel werden insbesondere auch zur Zusammenstellung von Warenlieferungen und somit zu Kommissionierzwecken eingesetzt.

Bei den Fördermitteln gemäß der EP 0 516 969 B1 und der DE 299 09 959 U1 sind die Laufkörper als Rollenlaufwerke ausgebildet, die einen V-förmigen Bügel aufweisen, welcher an seinen beiden abstehenden freien Enden jeweils eine drehbar gelagerte Laufrolle trägt. Im Förderbetrieb stützt sich jeder Bügel mit seinen Laufrollen an äußeren Schrägflächen einer ein Satteldachprofil aufweisenden Führungsschiene ab, so dass der Bügel mit seinem Scheitel nach unten hängt. Die Verbindungsstange ist an ihren beiden Stirnenden über eine Gelenkanordnung gelenkig mit den Bügeln der Rollenlaufwerke verbunden.

Das dokument EP 0 062 452 A offenbart auch eine Hängefördereinrichtung. Die bekannten Fördermittel haben sich im Einsatz bewährt. Es hat sich jedoch als teils schwierig erwiesen, sie mit Waren, also z. B. an Kleiderbügeln hängenden Kleidungsstücken zu beschicken bzw. die Kleiderbügel mit der daran hängenden Ware wieder abzunehmen.

Der Erfindung liegt die Aufgabe zugrunde, ein Fördermittel der eingangs genannten Art bereitzustellen, welches auf einfachere Weise automatisch mit Förderguthaltern, z. B. Kleiderbügeln zu beladen und zu entladen ist und einen einfachen Aufbau aufweist.

Ausgehend von einem Fördermittel mit den eingangs genannten Merkmalen wird diese Aufgabe erfindungsgemäß dadurch gelöst, dass der Lastaufnahmekörper einen bei bestimmungsgemäß an der Führungsschiene hängendem Fördermittel seitlich quer zur Führungsschiene abstehenden Freiträger aufweist, der an seinem distalen Ende den Anhängabschnitt aufweist, wobei der Anhängabschnitt an seiner Oberseite durchgehend frei ist, so dass er von beiden einander entgegengesetzten Seiten längs der Führungsschiene für die Bestückung mit einem Haken eines Fördergutträgers zugänglich ist.

Damit wird erreicht, dass in Führungsschienenlängsrichtung keine Störkontur von Halterungsteilen des Anhängabschnitts vorhanden sind, welche das Bestücken der Lastaufnahmekörper mit Haken von Förderguthaltern und insbesondere das Umsetzen solcher Haken zwischen benachbarten Fördermitteln erschweren würden.

Vorzugsweise hat das Fördermittel an seinem Laufkörper wenigstens eine Laufrolle, mit der der Laufkörper an der Führungsschiene zur Bewegung daran anzuhängen ist, wobei der Lastaufnahmekörper - in Laufrichtung des Fördermittels längs der Führungsschiene betrachtet - ein Hakenprofil zeigt, dessen freies Hakenprofilende (Hakenspitze) den Anhängabschnitt bildet. Wollte man ein Einzelfördermittel gemäß der DE 198 16 688 A1 oder der EP 0 623 497 A1 in erfindungsgemäßer Weise umgestalten, so müsste man den Haken des bekannten Fördermittels um 90° verdreht ausrichten, so dass das Hakenmaul in einer Ebene quer zur Führungsschiene orientiert ist, wobei weiterhin das freie Hakenende zu einem Anhängabschnitt umzugestalten wäre, an den ein Haken eines Förderguthalters sicher anzuhängen ist. Im Normalfall, dass eine Vielzahl gleichartiger Fördermittel nebeneinander liegend an der Führungsschiene mit Förderguthaltern zu beladen sind, ergeben sich bei der erfindungsgemäßen Lösung erhebliche Handhabungsvorteile. So ist es auf einfache Weise möglich, die Förderguthalter aus einem Bündel heraus auf die Fördermittel nach der Erfindung zu verteilen, da in Schienenlaufrichtung keine Störkonturen zwischen den Anhängabschnitten der Fördermittel vorhanden sind.

Vorzugsweise weist das Fördermittel nach der Erfindung einen oder ggf. mehrere Laufkörper mit einem jeweiligen Rollenpaar auf, wobei die Laufrollen von einem im Förderbetrieb normalerweise im Wesentlichen vertikal ausgerichteten, länglichen Rahmenteil zu einander entgegengesetzten Seiten abstehen und der jeweilige Laufkörper einseitig mit jeweils einer Laufrolle an der Führungsschiene anzuhängen ist. Laufkörper dieser Art sind z. B. aus der DE 198 16 688 A1 oder der EP 0 623 497 A1 bekannt.

Vorzugsweise weist das Fördermittel nach der Erfindung an dem länglichen Rahmenteil der Laufkörper Reibkopplungsmittel zur reibschlüssigen Kopplung des jeweiligen Laufkörpers mit einem längs der Führungsschiene geführt bewegten und zur reibschlüssigen Mitnahme der Fördermittel längs der Förderstrecke vorgesehenen Reibbandes auf.

Ferner wird vorgeschlagen, dass die Laufkörper Freischaltmittel aufweisen, die im Falle eines Fördermittelstaus auf der Förderstrecke eine Aufhebung oder zumindest Herabsetzung der reibschlüssigen Kopplung der Reibkopplungsmittel mit dem Reibband bewirken, wobei die Freischaltmittel im Stau einander benachbarter Laufkörper aufeinander folgender Fördermittel miteinander in Wechselwirkung treten. Derartige Freischaltmittel an Laufkörpern sind an sich z. B. aus der EP 0 623 497 A1 und der DE 198 16 688 A1 bekannt.

In einer besonders bevorzugten Ausführungsform der Erfindung weist das Fördermittel wenigstens zwei hintereinander an einer betreffenden Führungsschiene hängend bewegbare und miteinander verbundene Laufkörper auf, die gemeinsam den Lastaufnahmekörper tragen. Mit einer solchen Lösung ist das erfindungsgemäße Konzept der in Laufschienenrichtung störungskonturenfreien Gestaltung der Anhängabschnitte auf ein Fördermittel für mehrere Förderguthalter, z. B. Kleiderbügel, übertragbar.

Vorzugsweise weist der Lastaufnahmekörper dabei eine Längs-, insbesondere parallel zu einer kürzesten Verbindungslinie zwischen den Laufkörpern verlaufende, mittels Freiträger gehaltene längliche Halteleiste auf, die den Anhängabschnitt bildet. Mit "Freiträger" ist auch bei diesem Ausführungsbeispiel eine seitlich auskragende Trägerstruktur gemeint, die den Anhängabschnitt an ihrem distalen Ende aufweist und somit dort keine Verbindungsstreben nach oben hin, d. h. zum Laufkörper hin, aufweist.

Auch ein solches Fördermittel ist dann normalerweise so gestaltet, dass der Lastaufnahmekörper - in Laufrichtung des Fördermittels längs der Führungsschiene betrachtet - ein Hakenprofil zeigt, dessen freies Hakenprofilende den Anhängabschnitt bildet.

Gemäß einer Variante eines solchen Mehrfachfördermittels bildet die Halteleiste ein Verbindungselement, welches von zwei von den Laufkörpern seitlich abstehenden Freiträgem an deren distalen Enden getragen wird.

Gemäß einer weiteren bevorzugten Ausführungsform der Erfindung weist der Lastaufnahmekörper ein die Laufkörper miteinander verbindendes Verbindungselement auf, wobei die Halteleiste längs neben, insbesondere zumindest annähernd parallel zu diesem Verbindungselement verläuft, durch eine Freiträgeranordnung mit dem Verbindungselement verbunden und von der Freiträgeranordnung so gestützt ist, dass sie an ihrer Oberseite über ihre gesamte Länge durchgehend frei ist.

Abweichend von den Fördermitteln aus dem Stand der Technik ist der Anhängabschnitt bei einem solchen Fördermittel nach der Erfindung nicht das unmittelbare Verbindungselement als solches, sondern eine neben dem Verbindungselement verlaufende Halteleiste, die an einer Stelle unterhalb ihrer Oberseite von dem am Verbindungselement angeordneten Trägerabschnitt abgestützt ist. Unter dem Begriff Halteleiste sind längliche stangenartige Elemente oder Abschnitte zu verstehen. Dass sie an ihrer Oberseite über ihre gesamte Länge durchgehend frei sind bedeutet, dass sie einen Freiraum über ihrer Oberseite haben. Wie im Folgenden noch erläutert wird, soll dies jedoch nicht ausschließen, dass durch diesen Freiraum hindurch zu dem Anhängabschnitt hin bedarfsweise bewegliche Rutschanschläge bewegt werden können.

Der über die gesamte Länge der Halteleiste durchgehende Freiraum erleichtert das oben schon dargelegte Beschicken des Anhängabschnitts mit den Haken der Förderguthalter. Dies gilt insbesondere für den Fall, dass eine ganze Gruppe von Fördermitteln in einem Fördermittelstau mit Förderguthaltern beladen werden soll. Der durchgehende Freiraum über den Anhängabschnitten ermöglicht es auf einfache Weise, eine Vielzahl von Haken von Förderguthaltern in einem Beladevorgang auf eine Gruppe aneinander angefügter Fördermittel zu verteilen. Dabei ist es ferner auf einfache Weise möglich, bei Bedarf Förderguthalter von einem Fördermittel auf ein benachbartes Fördermittel umzusetzen, ohne die Förderguthalterhaken seitlich außen an Störkonturen vorbeiheben zu müssen. Bei den bekannten Fördermitteln aus dem Stand der Technik, bei denen der Anhängabschnitt unmittelbar von dem Verbindungselement gebildet ist, stellen die Laufkörper selbst solche Störkonturen dar.

Gemäß einer Ausführungsform sind das Verbindungselement, der Trägerabschnitt und die Halteleiste aus einem gemeinsamen Blechbiegeteil geformt. Dieses Blechbiegeteil hat vorzugsweise einen hakenförmigen Querschnitt mit nach oben weisender Hakenspitze, die zu dem Anhängabschnitt gehört.

Vorzugsweise ist der Lastaufnahmekörper jedoch als Kunststoffteil, insbesondere Spritzgussteil ausgebildet.

Vorzugsweise sind die Laufkörper drehbeweglich an dem Verbindungselement befestigt, so dass sie bei Kurvenfahrten Ausgleichsbewegungen um vertikale Drehachsen machen können.

Gemäß einer Ausführungsform der Erfindung weist die Halteleiste des Fördermittels in der Nähe eines ihrer Längsenden einen insbesondere nach oben abstehenden Vorsprung als Rutschanschlag für Haken von Förderguthaltern auf. Dieser Rutschanschlag verhindert, dass die Haken von Förderguthaltern an dem betreffenden Längsende von der Halteleiste abrutschen. Ein solcher Rutschanschlag kann zusätzlich auch in der Nähe des anderen Längsendes der Halteleiste vorgesehen sein.

Gemäß einer anderen Variante des Fördermittels nach der Erfindung ist die Halteleiste an ihrer Oberseite im Wesentlichen durchgehend flach. Dies soll bedeuten, dass keine Erhebungen in Form von Rutschanschlägen an der Oberseite der Halteleiste vorgesehen sind. Gegebenenfalls können jedoch kleine Kerben vorgesehen sein, die die Haken von Förderguthaltern aufnehmen können. Um zu verhindern, dass Förderguthalter von den Anhängabschnitten abrutschen, kann wenigstens ein verstellbarer Rutschanschlag als wahlweise einzusetzendes Begrenzungselement für den Anhängabschnitt vorgesehen sein. Dabei handelt es sich vorzugsweise um ein an dem Verbindungselement oder an dem Laufkörper zwischen einer Durchlassstellung und einer Anschlagstellung insbesondere vertikal verschiebbar angeordnetes Element, das in seiner Durchlassstellung von der Halteleiste zurückgezogen ist, so dass es kein Hindernis für auf der Halteleiste rutschende Haken bildet, und das in seiner Anschlagstellung an die Halteleiste herangeführt ist, um eine Sperre für auf der Halteleiste rutschende Haken zu bilden. Auf diese Weise kann somit der Freiraum an der Oberseite der Halteleiste bedarfsweise unterbrochen werden. Zum Beladen oder Entladen des Fördermittels kann er jedoch durch Zurückziehen der verstellbaren Rutschanschläge wieder geöffnet werden.

Gemäß einer besonders bevorzugten Ausgestaltung der Erfindung sind die Fördermittel zu gemeinsam handhabbaren Fördermittelgruppen aneinanderfügbar, so dass die Halteleisten einander benachbarter Fördermittel mit ihren Längsenden unmittelbar aneinander anschließen oder gar an komplementären Überlappungsabschnitten einander seitlich überlappen. Eine solche Ausgestaltung erleichtert das gruppenweise Beschicken der Fördermittel im Fördermittelstau und ebenso das Entladen der Fördermittel.

Ausführungsbeispiele der Erfindung werden nachstehend unter Bezugnahme auf die Figuren näher erläutert.
- Fig. 1: zeigt ein erstes Ausführungsbeispiel eines Fördermittels nach der Erfindung in einer perspektivischen Darstellung.
- Fig. 2: zeigt in der Anordnung an einer Führungsschiene drei Fördermittel der in Fig. 1 gezeigten Art in einem Förder- mittelstau, dies ebenfalls in perspektivischer Darstellung.
- Fig. 3 und 4: zeigen in einer perspektivischen Darstellung ein zweites Ausführungsbeispiel nach der Erfindung mit zwei unter- schiedlichen Stellungen eines verstellbaren Rutschan- schlags.
- Fig. 5 und 6: zeigen in einer perspektivischen Darstellung ein drittes Aus- führungsbeispiel nach der Erfindung mit zwei unterschied- lichen Stellungen zweier Rutschanschläge.
- Fig. 7a) und b): zeigen als weiteres Ausführungsbeispiel eines Fördermittels nach der Erfindung einen sog. Einzelbügelträger mit lediglich einem Laufwerk, wobei Fig. 7a) eine Vorderansicht - und Fig. 7b) eine Seitenansicht des Fördermittels zeigt.
- Fig. 8a) - c): stellen in einer Vorderansicht, einer Seitenansicht und einer Draufsicht ein besonders bevorzugtes Ausführungsbeispiel eines Fördermittels nach der Erfindung mit zwei Laufwerken dar.
- Fig. 9a) und b): zeigen zwei Fördermittel der Bauart gemäß Fig. 8 in zwei Momentaufnahmen bei ihrem Aufeinandertreffen zur Bildung eines Fördermittelstaus.

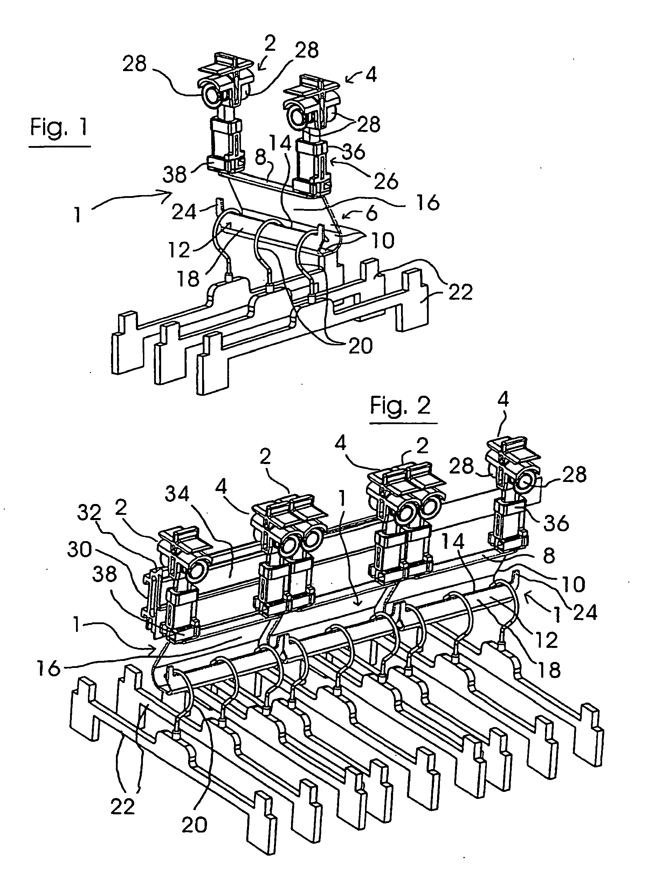

Das in Fig. 1 dargestellte Fördermittel 1 weist zwei Laufkörper 2, 4 auf, die in ihrem unteren Bereich durch ein den Lastaufnahmekörper bildendes Blechbiegeteil 6 miteinander verbunden sind, welches ein oberes Verbindungselement 8 in Gestalt eines sich von Laufkörper 2 zu Laufkörper 4 entlang bzw. parallel zur kürzesten Verbindungslinie dazwischen erstreckenden Blechstreifens, einen daran hängenden und zu einem Hakenprofil mehrfach umgekanteten Freiträgerabschnitt 10 und eine davon nach oben abstehende Halteleiste 12 aufweist. Die Halteleiste 12 liegt mit ihrer Oberseite 14 in Flucht unter den vertikal ausgerichteten Laufkörpern 2, 4 und ist von dem Freiträgerabschnitt 10 von unten abgestützt, so dass sie an ihrer Oberseite 14 über ihre gesamte Länge durchgehend frei ist, d. h. einen Freiraum 16 aufweist. Die Halteleiste 12 bildet den Anhängabschnitt 18, an den die Haken 20 von Förderguthaltern 22 anzuhängen sind, wie dies in den Figuren am Beispiel von Kleiderbügeln 22 gezeigt ist. Bei dem in den Fig. 1 und 2 dargestellten Ausführungsbeispiel ist der Anhängabschnitt 18 durch zwei Rutschanschläge 24 an den Längsenden der Halteleiste 12 begrenzt. Bei diesen Rutschanschlägen 24 handelt es sich um starr nach oben abstehende Vorsprünge, die verhindern, dass die Haken 20 von der Halteleiste während des Transports abrutschen. Sie können auch die Funktion von Hakenmitnehmerelementen bei der automatischen Beladung des Fördermittels haben.

Die um vertikale Achsen drehbar an dem Verbindungselement-Blechstreifen 8 befestigten Laufkörper 2, 4 haben einen Aufbau, wie er z.B. von den Laufkörpern aus der EP 0 623 497 A1 bekannt ist. Jeder Laufkörper 2, 4 hat einen im Förderbetrieb normalerweise im Wesentlichen vertikal ausgerichteten länglichen Rahmenteil 26 und Laufrollen 28, die um eine gemeinsame Achse drehbar sind und von dem Rahmenteil 26 zu einander entgegengesetzten Seiten abstehen. Wie aus Fig. 2 zu ersehen ist, sind die Laufkörper 2, 4 mit jeweils einer Laufrolle 28 an einer Führungsschiene 30 einer Hängefördereinrichtung einseitig anzuhängen, so dass sie längs der Führungsschiene 30 verfahrbar sind, wobei die konischen Laufrollen 28 an dem dazu komplementären Laufprofil 32 der Führungsschiene 30 abrollen. Längs der Führungsschiene 30 läuft ein Reibband 34, bei dem es sich um ein Endlosband handelt, das zum Umlauf um Umlenkrollen angetrieben wird. Es dient zum reibschlüssigen Antrieb der Fördermittel 1 und steht hierzu mit Reibkopplungsmitteln 36 der Fördermittel 1 reibschlüssig in Kontakt. Im Falle eines Staus von Fördermitteln 1, wie er in Fig. 2 angedeutet ist, können sich die Fördermittel 1 gegenseitig von dem Reibbandantrieb abkoppeln. Hierzu weisen sie Freischaltmittel 38 auf, wobei die Freischaltmittel 38 im Stau einander benachbarter Laufkörper 2, 4 aufeinander folgender Fördermittel 1 miteinander in Wechselwirkung treten, um die Laufkörper 2, 4 so zu verschwenken, dass die Reibkopplungsmitel 36 vom Reibband 34 weitestgehend freikommen. Sobald das im Stau vorderste Fördermittel 1 zur Weiterfahrt freigegeben wird, löst sich der Fördermittelstau auf und die Laufkörper 2, 4 kommen nacheinander wieder in Kontakt mit dem Reibband 34, so dass die Fördermittel 1 wieder zur Weiterfahrt angetrieben werden.

Fig. 2 lässt auch erkennen, dass die Fördermittel 1 zu gemeinsam handhabbaren Fördermittelgruppen aneinanderfügbar sind, so dass die Halteleisten 12 einander benachbarter Fördermittel 1 mit ihren Längsenden unmittelbar aneinander anschließen. Der Freiraum 16 erstreckt sich dabei durchgehend über alle Halteleisten 12 der Gruppe von Fördermitteln. Dies erleichtert das gruppenweise Beschicken der Fördermittel mit Kleiderbügeln 22 sowie auch das gruppenweise Entladen der Fördermittel. Ferner erlaubt der durchgehende Freiraum 16 ein einfaches Übersetzen von Kleiderbügeln 22 von Fördermittel zu Fördermittel, ohne dass die Haken 20 aus ihrer Überdeckung mit der Halteleiste 12 seitlich herausgenommen werden müssten.

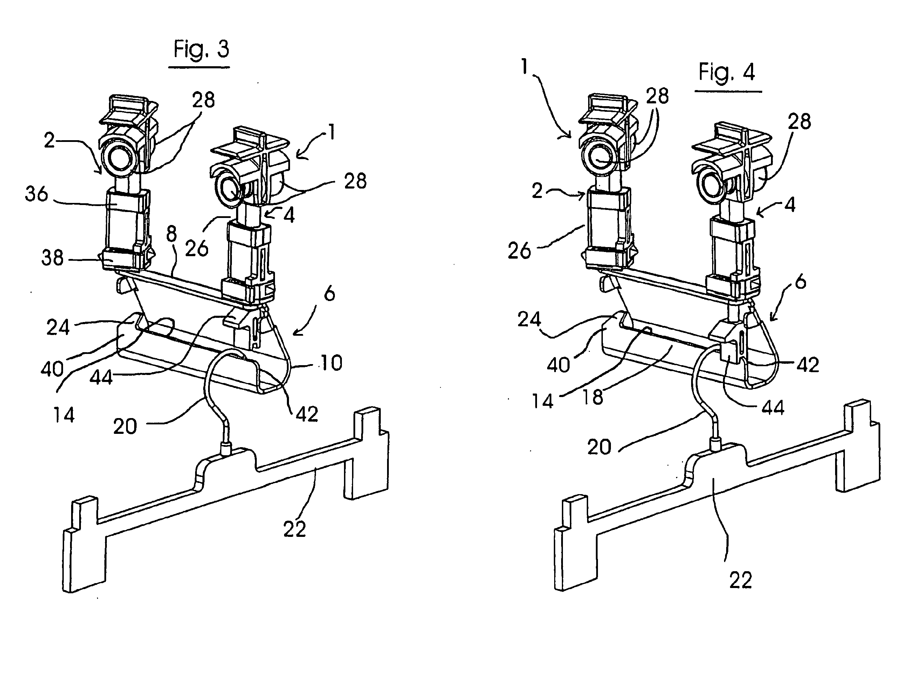

Fig. 3 und Fig. 4 zeigen ein zweites Ausführungsbeispiel der Erfindung. Elemente in den Fig. 3 und 4, die ihrem Aufbau und ihrer Funktion nach im Wesentlichen Elementen in den Fig. 1 und 2 entsprechen, sind in den Fig. 3 und 4 mit unveränderten Bezugszeichen gekennzeichnet. Das zweite Ausführungsbeispiel unterscheidet sich von dem ersten Ausführungsbeispiel im Wesentlichen nur durch die Gestaltung der Rutschanschläge. Bei dem zweiten Ausführungsbeispiel ist an einem Ende 40 der Halteleiste 12 ein starrer Rutschanschlag 24 als nach oben hin vorstehender Vorsprung vorgesehen, wohingegen an dem anderen Längsende 42 der Halteleiste 12 ein solcher Rutschanschlag fehlt. Es ist somit relativ einfach, Haken 20 von dem Längsende 42 her auf den Anhängabschnitt 14 aufzureihen. Um zu verhindern, dass Haken 20 unbeabsichtigt an dem Längsende 42 der Halteleiste 12 beim Transport abrutschen und von dem Fördermittel 1 fallen, ist ein verstellbarer Rutschanschlag 44 vorgesehen, der an dem Verbindungselement 8 mittels einer Kulissenführung vertikal verschiebbar zwischen der in Fig. 3 gezeigten Durchlassstellung und der in Fig. 4 gezeigten Anschlagstellung gehalten ist. In der Durchlassstellung ist der verstellbare Rutschanschlag 44 so weit von der Halteleiste 12 zurückgezogen, dass er kein Hindernis für auf der Halteleiste 12 verrutschende Haken bildet. Die Halteleiste 12 ist somit an ihrer Oberseite 14 über ihre gesamte Länge durchgehend frei.

In der Anschlagstellung gemäß Fig. 4 ist der verstellbare Rutschanschlag 44 an die Halteleiste 12 so nah herangeführt, dass er eine Sperre für auf der Halteleiste 12 rutschende Haken 20 bildet. Die Stellung des Rutschanschlags gemäß Fig. 4 wird üblicherweise während des Transports des Fördermittels 1 gewählt.

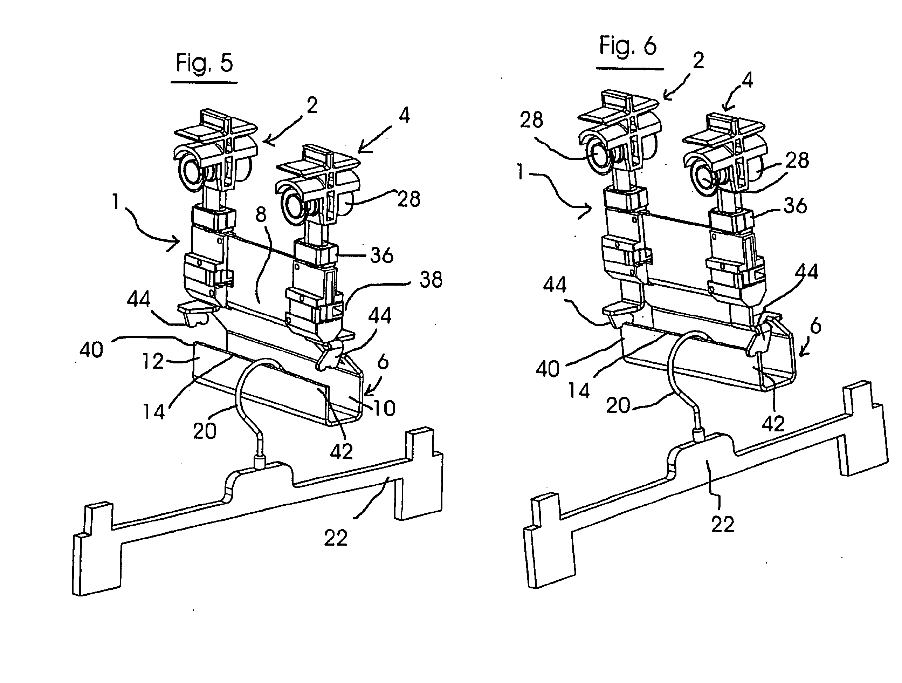

Das in den Fig. 5 und 6 gezeigte dritte Ausführungsbeispiel der Erfindung weist zwei verstellbare Rutschanschläge 44 auf, die aus der in Fig. 5 gezeigten Durchlassstellung in die in Fig. 6 gezeigte Anschlagstellung unabhängig voneinander bewegbar sind, um bedarfsweise an beiden Längsenden 40, 42 der Halteleiste 12 eine Sperre für auf der Halteleiste 12 rutschende Haken 20 zu bilden. Die Verstellung der Rutschanschläge 44 kann manuell oder z. B. mittels einer externen starren oder schaltbaren Kulissenleiste an der Förderstrecke erfolgen.

Die Oberseite 14 der Halteleiste 12 ist durchgehend flach, d. h. sie weist keine Erhebungen in Form von Anschlagvorsprüngen oder dgl. auf. Bei allen drei Ausführungsbeispielen sind die Fördermittel 1 zu gemeinsam handhabbaren Fördermittelgruppen aneinanderfügbar, so dass die Halteleisten 12 einander benachbarter Fördermittel 1 mit ihren Längsenden unmittelbar aneinander anschließen.

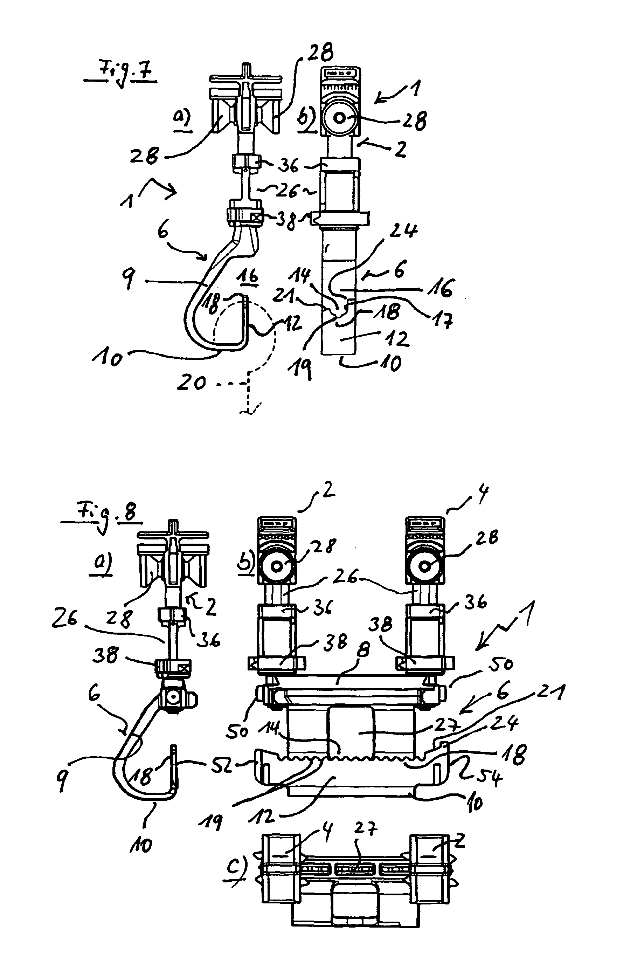

Das Fördermittel in den Fig. 7a) und 7b) hat einen einzelnen Laufkörper 2, der sich von den Laufkörpern aus den vorstehend beschriebenen Ausführungsbeispielen der Erfindung nicht wesentlich unterscheidet, so dass unter Verwendung gleicher Bezugszeichen wie in den vorausgegangenen Ausführungsbeispielen auf die Laufkörperbeschreibung zu den Fig. 1 - 6 Bezug genommen werden kann.

An dem unteren Ende des Laufkörpers 2 ist der Lastaufnahmekörper 6 befestigt, der in Vorderansicht gemäß Fig. 7a) und somit in Laufrichtung des Fördermittels 1 längs einer betreffenden Führungsschiene betrachtet ein Hakenprofil zeigt, dessen freies Hakenprofilende den Anhängabschnitt 18 bildet, welcher an seiner Oberseite 14 durchgehend frei ist, also an dem Freiraum 16 angrenzt.

Der von dem Hakenrücken 9 seitlich quer abstehende Abschnitt 10 dient hier als Freiträger.

Wie in Fig. 7b) erkennbar ist, weist der Anhängabschnitt 18 eine Vertiefung 17 - und in deren Grund noch eine kleinere Vertiefung 19 auf. Die Vertiefung 19 dient als Aufnahme für einen Haken 20 mit kleinem Querschnitt, also etwa dem Drahthaken eines Kleiderbügels. Die Vertiefung 17 dient zur Aufnahme von Anhängmitteln mit größeren Hakenquerschnitten.

Die Oberseite 14 des Anhängabschnitts 18 ist ferner so konturiert, dass ein Schrägflächenabschnitt 21 und ein Rutschanschlag 24 vorliegen. Die Konturen 21, 24 erleichtern das automatische Beladen des Fördermittels 1 mit einem Förderguthalter.

Auch Fördermittel 1 gemäß Fig. 7a) und b) können gruppenweise zu einem Fördermittelstau zusammengefügt werden, so dass die Anhängabschnitte 18 Seite an Seite aneinander angrenzen, was wiederum die gruppenweise Beladung der Fördermittel 1 erleichtert.

Bei dem Fördermittel gemäß Fig. 7a) und Fig. 7b) ist der Lastaufnahmekörper 6 vorzugsweise aus Kunststoff hergestellt und kann z. B. ein Kunststoffspritzgussteil sein, welches auch Rahmenteile 24 des Laufkörpers umfasst.

Das in den Fig. 8a) - 8c) gezeigte Fördermittel nach der Erfindung ist eine besonders bevorzugte Variante des in Fig. 1 gezeigten Bautyps. Es weist zwei gleichartige Laufkörper 2, 4 auf, die den bereits erörterten Laufkörpern der vorausgegangenen Ausführungsbeispiele entsprechen. Die Laufkörper 2, 4 sind durch den Lastaufnahmekörper 6 an ihren unteren Enden miteinander verbunden. Der Lastaufnahmekörper 6 in den Fig. 8a) - 8c) ist ein Kunststoffteil, welches das in Fig. 8a) gut erkennbare Hakenprofil mit den Abschnitten Hakenrücken 9, Freiträger 10 und Anhängabschnitt 18 aufweist. Die Aussparungen 27 in dem Lastaufnahmekörper 6 dienen der Gewichtsreduzierung des Fördermittels 1.

In Fig. 8b) ist gut zu erkennen, dass der Anhängabschnitt 18 an seiner Oberseite 14 eine Riffelung mit Einbuchtungen 19 zur Aufnahme mehrerer Förderguthalterhaken aufweist. An den Längsenden der Lastaufnahmekörper 6 weist das Fördermittel 1 in den Fig. 8a) - 8c) Stoßdämpferelemente 50 auf. Im Beispielsfall handelt es sich hierbei um Gummipufferelemente 50 im oberen Bereich des Lastaufnahmekörpers 6. Diese Stoßdämpferelemente 50 dämpfen den Stoß beim Aufeinandertreffen zweier Fördermittel 1, wie dies z. B. bei der Staubildung von Fördermitteln 1, insbesondere an bzw. unmittelbar nach Gefällestrecken vorkommt. Die Stoßenergie wird dabei vermittels der Stoßdämpferelemente 50 in den Lastaufnahmekörper 6 eingeleitet. Damit wird verhindert, dass der Auffahrstoß unmittelbar auf die Laufkörper 2, 4 einwirken und diese dabei aus ihrer Führung an der Führungsschiene drücken kann.

Ein weiteres sehr vorteilhaftes Merkmal des Fördermittels nach Fig. 8a) - Fig. 8c) stellen Überlappzonen 52, 54 an den Längsenden des Anhängabschnitts 18 dar. Die Überlappzone 52 ist eine von oben nach unten durchgehende Schrägfläche, die in der Darstellung gemäß Fig. 8b) auf der dem Betrachter zugewandten Seite des Anhängabschnittes 18 liegt. Der Überlappabschnitt 54 ist eine dazu komplementäre Schrägfläche, die in Fig. 8 b) auf der dem Betrachter abgewandten Seite des Anhängabschnittes 18 liegt. Es sei darauf hingewiesen, dass anstelle von Schrägflächen 52, 54 z. B. auch einander komplementäre Verschlankungen anderer Art, etwa Stufen, als Überlappabschnitte an den Längsenden des Anhängabschnittes 18 vorgesehen sein könnten.

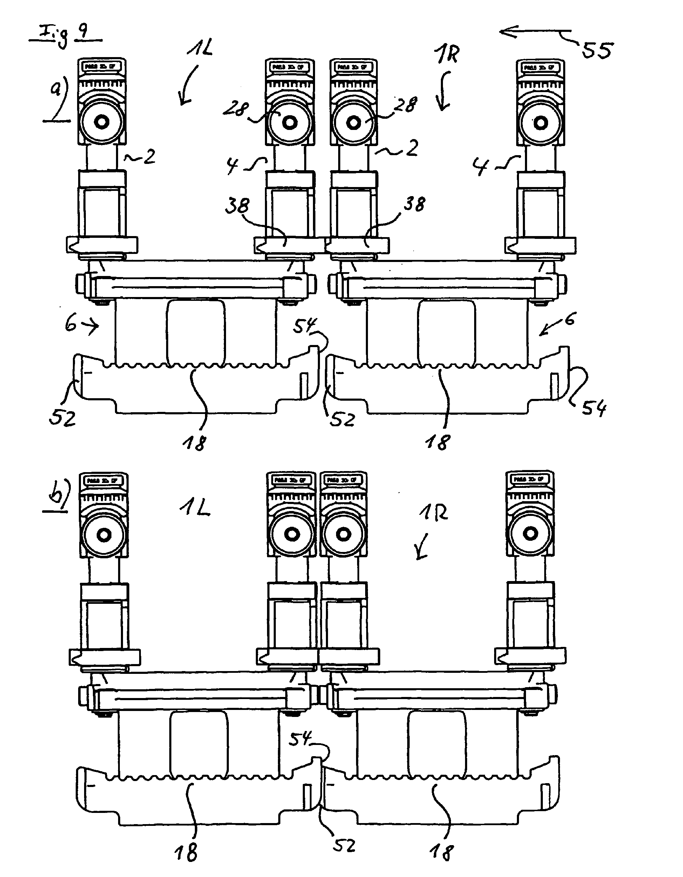

In den Fig. 9a) und 9b) sind in Seitenansichten zwei Momentaufnahmen bei der Annäherung zweier Fördermittel 1 der in Fig. 8 gezeigten Bauart im Staubildungsfall gezeigt. In Fig. 9a) nähert sich das rechte Fördermittel 1R dem linken Fördermittel 1L in Förderrichtung 55 an, wobei die Freischaltmechanismen 38 kurz darauf zur Wirkung kommen, so dass das rechte Fördermittel 1R von seinem (in Fig. 9 nicht gezeigten) Reibbandantrieb an der Führungsschiene freikommt. Im Zuge dieses Freischaltens des Fördermittels 1 vom Reibbandantrieb kommen die einander zugewandten Stoßdämpferelemente 50 der beiden Fördermittel 1R und 1 L zusammen, so dass schließlich die Situation gemäß Fig. 9b) entsteht, in der die Überlappzone 54 des Fördermittels 1 L mit der komplementären Überlappzone 52 des Fördermittels 1 R in seitlicher Überdeckung steht. Dadurch wird vermieden, dass ein durchgehender Längsspalt orthogonal zur Führungsschiene zwischen den Anhängabschnitten 18 der im Stau einander benachbarten Fördermittel 1 R und 1 L entsteht. Beim Übersetzen eines Hakens eines Kleiderbügels vom Fördermittel 1 L zum Fördermittel 1 R oder umgekehrt ist somit einfach möglich, ohne Gefahr zu laufen, dass der Kleiderbügelhaken an der Trennstelle zwischen den beiden Fördermitteln 1 L, 1 R nach unten fällt.

Die einander komplementären Schrägflächen 52, 54 können gemäß einer Variante des Fördermittels so gestaltet sein, dass es bei Annäherung des Fördermittels 1 R an das Fördermittel 1 L dazu kommt, dass der aufgrund der Freischaltwirkung der miteinander in Wechselwirkung tretenden Freischaltmittel 38 seitlich nach außen in Richtung zu dem Betrachter der Fig. 9a) verschwenkte Anhängabschnitt 18 des Fördermittels 1 R den Anhängabschnitt 18 des Fördermittels 1 L ebenfalls tendenziell seitlich nach außen drückt, um dessen Antriebskopplung mit dem Reibband (nicht gezeigt) tendenziell herabzusetzen, sofern das Fördermittel 1L nicht ohnehin von einem anderen Nachbarfördermittel freigeschaltet worden ist.

## Patentansprüche

1. Fördermittel für eine Hängefördereinrichtung, welches wenigstens einen an einer Führungsschiene (30) hängend bewegbaren Laufkörper (2, 4) hat, der einen Lastaufnahmekörper (6) mit einem Anhängabschnitt (18) für Haken (20) von Förderguthaltern (22), z. B. Kleiderbügeln, aufweist, wobei
der Lastaufnahmekörper (6) einen bei bestimmungsgemäß an der Führungsschiene (30) hängendem Fördermittel (1) seitlich quer zur Führungsschiene (30) nach außen abstehenden Freiträger (10) aufweist, der an seinem distalen Ende den Anhängabschnitt (18) aufweist, **dadurch gekennzeichnet, dass** der Anhängabschnitt (18) an seiner Oberseite durchgehend frei ist, so dass er von beiden einander entgegengesetzten Seiten längs der Führungsschiene (30) für die Bestückung mit einem Haken (20) eines Förderguthalters (22) zugänglich ist.

2. Fördermittel nach Anspruch 1, **dadurch gekennzeichnet, dass** der Laufkörper (2, 4) wenigstens eine Laufrolle (28) aufweist, mit der er an der Führungsschiene (30) zur Bewegung daran anzuhängen ist, und dass der Lastaufnahmekörper (6) - in Laufrichtung des Fördermittels (1) längs der Führungsschiene (30) betrachtet - ein Hakenprofil zeigt, dessen freies Hakenprofilende den Anhängabschnitt (18) bildet.

3. Fördermittel nach Anspruch 2, **dadurch gekennzeichnet, dass** der Laufkörper (2, 4) ein Laufrollenpaar (28) aufweist und dass die Laufrollen (28) von einem im Förderbetrieb normalerweise im Wesentlichen vertikal ausgerichteten länglichen Rahmenteil (26) zu einander entgegengesetzten Seiten abstehen, wobei der Laufkörper (2, 4) einseitig mit jeweils einer Laufrolle (28) an der Führungsschiene (30) anzuhängen ist.

4. Fördermittel nach Anspruch 3, **dadurch gekennzeichnet, dass** an dem länglichen Rahmenteil (26) des Laufkörpers (2, 4) Reibkopplungsmittel (36) zur reibschlüssigen Kopplung des jeweiligen Laufkörpers (2, 4) mit einem längs der Führungsschiene (30) geführt bewegten und zur reibschlüssigen Mitnahme betreffender Fördermittel (1) längs der Förderstrecke vorgesehenen Reibbandes (34) angeordnet sind.

5. Fördermittel nach Anspruch 4, **dadurch gekennzeichnet, dass** der Laufkörper (2, 4) Freischaltmittel (38) aufweist, die im Falle eines Fördermittelstaus auf der Förderstrecke eine Aufhebung oder zumindest Herabsetzung der reibschlüssigen Kopplung der Reibkopplungsmittel (36) mit dem Reibband (34) bewirken, wobei die Freischaltmittel (38) im Stau einander benachbarter Laufkörper (2, 4) aufeinander folgender Fördermittel (1) miteinander in Wechselwirkung treten.

6. Fördermittel nach einem der vorhergehenden Ansprüche, **dadurch gekennzeichnet, dass** es wenigstens zwei hintereinander an einer betreffenden Führungsschiene (30) hängend bewegbare und miteinander verbundene Laufkörper (2, 4) aufweist, die gemeinsam den Lastaufnahmekörper (6) tragen.

7. Fördermittel nach Anspruch 6, **dadurch gekennzeichnet, dass** der Lastaufnahmekörper (6) eine längs, insbesondere parallel zu einer kürzesten Verbindungslinie zwischen den Laufkörpern (2, 4) verlaufende, mittels Freiträger (10) gehaltene längliche Halteleiste (12) aufweist, die den Anhängabschnitt (18) bildet.

8. Fördermittel nach Anspruch 7, **dadurch gekennzeichnet, dass** der Lastaufnahmekörper (6) ein die Laufkörper (2, 4) miteinander verbindendes Verbindungselement (8) aufweist und dass die Halteleiste (12) längs neben, insbesondere zumindest annähernd parallel zum Verbindungselement (8) verläuft, durch eine Freiträgeranordnung (10) mit dem Verbindungselement (8) verbunden und von der Freiträgeranordnung (10) so gestützt ist, dass sie an ihrer Oberseite (14) über ihre gesamte Länge durchgehend frei ist.

9. Fördermittel nach einem der Ansprüche 6 bis 8, **dadurch gekennzeichnet, dass** die Laufkörper (2, 4) drehbeweglich an dem Lastaufnahmekörper (8) befestigt sind.

10. Fördermittel nach einem der vorhergehenden Ansprüche 6 bis 9, **dadurch gekennzeichnet, dass** die Halteleiste (12) in der Nähe eines ihrer Längsenden einen insbesondere nach oben abstehenden Vorsprung (24) als Rutschanschlag für Haken (20) von Förderguthaltern (22) aufweist.

11. Fördermittel nach Anspruch 10, **dadurch gekennzeichnet, dass** die Halteleiste (12) auch in der Nähe des anderen Längsendes einen insbesondere nach oben abstehenden Vorsprung (24) als Rutschanschlag für Haken von Förderguthaltern aufweist.

12. Fördermittel nach einem der vorhergehenden Ansprüche, **dadurch gekennzeichnet, dass** es wenigstens einen verstellbaren Rutschanschlag (44) als wahlweise einzusetzendes Begrenzungselement für den Anhängabschnitt (18) aufweist.

13. Fördermittel nach Anspruch 12, **dadurch gekennzeichnet, dass** der verstellbare Rutschanschlag (44) ein an dem Verbindungselement (8) oder an dem Laufkörper (2, 4) zwischen einer Durchlassstellung und einer Anschlagstellung insbesondere vertikal verschiebbar angeordnetes Element ist, das in seiner Durchlassstellung von der Halteleiste (12) zurückgezogen ist, so dass es kein Hindernis für auf der Halteleiste (12) rutschende Haken (20) bildet, und das in seiner Anschlagstellung an die Halteleiste (12) herangeführt ist, um eine Sperre für auf der Halteleiste (12) rutschende Haken (20) zu bilden.

14. Fördermittel nach einem der vorhergehenden Ansprüche, **dadurch gekennzeichnet, dass** die Fördermittel zu gemeinsam handhabbaren Fördermittelgruppen aneinander fügbar sind, so dass die Anhängabschnitte (18) einander benachbarter Fördermittel mit ihren Längsenden unmittelbar aneinander anschließen.

15. Fördermittel nach einem der vorhergehenden Ansprüche, **dadurch gekennzeichnet, dass** es an den Längsenden des Anhängabschnittes (18) einander komplementär geformte Überlappabschnitte (52, 54) an entgegengesetzten Lateralseiten des Anhängabschnittes (18) aufweist, die einen seitlichen Überlapp mit betreffenden Überlappabschnitten (54, 52) von in einem Fördermittelstau aufeinanderfolgender folgenden Fördermitteln (1 L, 1 R) ermöglichen.

## Claims

1. Conveying means for an overhead conveyor, which comprises at least one running body (2, 4) which can be moved in a hanging state on a guiding rail (30), which running body comprises a load-bearing body (6) with a hang-on section (18) for hooks (20) of conveyed article holders (22), e.g. clothes hangers, wherein the load-bearing body (6) has a free support (10), which with conveying means (1) hanging as intended on the guide rail (30) projects laterally outwards transversely to the guide rail (30), and which free support has the hang-on section (18) at its distal end, **characterised in that** the hang-on section (18) is free continuously on its upper side, so that it is accessible from both opposite sides along the guiding rail (30) in order to be fitted with a hook (20) of a conveyed article holder (22).

2. Conveying means according to claim 1, **characterised in that** the running body (2, 4) comprises at least one running roller (28), by means of which it is to be hung onto the guiding rail (30) for movement thereon, and **in that** the load-bearing body (6) - as observed in the running direction of the conveying means (1) along the guiding rail (30) - has a hook profile, the free hook profile end of which forms the hang-on section (18).

3. Conveying means according to claim 2, **characterised in that** the running body (2, 4) comprises a running roller pair (28), and **in that** the running rollers (28) project on opposite sides from an elongated frame part (26) normally aligned substantially vertically in conveying operation, wherein the running body (2, 4) is hung on one side by a respective running roller (28) onto the guiding rail (30).

4. Conveying means according to claim 3, **characterised in that** on the elongated frame part (26) of the running body (2, 4) friction coupling means (36) are arranged for the frictional coupling of the respective running body (2, 4) with a conveying means (1) moved along the guiding rail (30) and relevant to the frictional drive along the friction belt (34) provided along the conveying path.

5. Conveying means according to claim 4, **characterised in that** the running body (2, 4) comprises isolating switching means (38), which in the case of a conveying means jam on the conveying path cancel or at least decrease the frictional coupling of the friction coupling means (36) with the friction belt (34), whereby the isolating means (38) in a jam of adjacent running bodies (2, 4) of consecutive conveying means (1) act reciprocally with one another.

6. Conveying means according to one of the preceding claims, **characterised in that** it comprises at least two running bodies (2, 4) which move suspended behind one another on a respective guiding rail (30) and are joined together, which running bodies together support the load-bearing body (6).

7. Conveying means according to claim 6, **characterised in that** the load-bearing body (6) comprises a holding strip (12) which runs in particular parallel to a shortest connecting line between the running bodies (2, 4) held by means of a self-supporting element (10) which forms the hang-on section (18).

8. Conveying means according to claim 7, **characterised in that** the load-bearing body (6) comprises a connecting element (8) connecting the running bodies (2, 4) to one another, and **in that** the holding strip (12) runs longitudinally next to, in particular at least almost parallel to the connecting element (8) and is connected by a self-supporting arrangement (10) with the connecting element (8) and supported by the self-supporting arrangement (10) so that on its upper side (14) it is fully free over its entire length.

9. Conveying means according to one of claims 6 to 8, **characterised in that** the running bodies (2, 4) are secured in a rotational manner onto the load-bearing body (8).

10. Conveying means according to one of the preceding claims 6 to 9, **characterised in that** the holding strip (12) in the vicinity of one of its longitudinal ends comprises an in particular upwardly projecting projection (24) as a slide stop for hooks (20) of conveyed article holders (22).

11. Conveying means according to claim 10, **characterised in that** the holding strip (12) also comprises in the vicinity of the other longitudinal end an in particular upwards projecting projection (24) as a slide stop for hooks of conveyed article holders.

12. Conveying means according to one of the preceding claims, **characterised in that** it comprises at least one adjustable slide stop (44) as an optionally used delimiting element for the hang-on section (18).

13. Conveying means according to claim 12, **characterised in that** the adjustable slide stop (44) is an element which is arranged in particular to be vertically displaceable on the connecting element (8) or on the running body (2, 4) between a throughput position and a stop position, which element is pulled back in its throughput position from the holding strip (12) so that it does not form an obstacle for the hooks (20) sliding on the holding strip (12), and which is brought into its stop position up to the holding strip (12) in order to form a barrier for hooks (20) sliding on the holding strip (12).

14. Conveying means according to one of the preceding claims, **characterised in that** the conveying means can be joined together to form jointly manipulated conveying means groups, so that the hang-on sections (18) of adjacent conveying means join together directly at their longitudinal ends.

15. Conveying means according to one of the preceding claims, **characterised in that** it comprises at the longitudinal ends of the hang-on section (18) complementary shaped overlapping sections (52, 54) on opposite lateral sides of the hang-on section (18), which allow a lateral overlap with respective overlap sections (54, 52) of conveying means (1 L, 1 R) that are consecutive to one another in a conveying means jam.

## Revendications

1. Moyen de transport pour un dispositif de transport en suspension qui a au moins un corps de roulement (2, 4) mobile suspendu à un rail de guidage (30) qui présente un corps de réception de charge (6) avec une partie de suspension (18) pour crochets (20) de supports de produits à transporter (22) par exemple des cintres,
le corps de réception de charge (6) présentant une poutre en porte-à-faux (10) dépassant vers l'extérieur latéralement transversalement au rail de guidage (30) lorsque le moyen de transport (1) est suspendu selon les dispositions au rail de guidage (30), laquelle présente sur son extrémité distale la partie de suspension (18), **caractérisé en ce que** la partie de suspension (18) est libre en continu sur son côté supérieur de sorte qu'elle soit accessible des deux côtés opposés le long du rail de guidage (30) pour l'équipement d'un crochet (20) d'un support de produits à transporter (22).

2. Moyen de transport selon la revendication 1, **caractérisé en ce que** le corps de roulement (2, 4) présente au moins un galet de roulement (28) avec lequel il doit être suspendu au rail de guidage (30) pour le déplacement sur celui-ci et **en ce que** le corps de réception de charge (6), considéré dans le sens de roulement du moyen de transport (1) le long du rail de guidage (30), montre un profilé de crochet, dont l'extrémité libre forme la partie de suspension (18).

3. Moyen de transport selon la revendication 2, **caractérisé en ce que** le corps de roulement (2, 4) présente une paire de galets de roulement (28) et **en ce que** les galets de roulement (28) dépassent d'une partie de cadre (26) oblongue, orientée essentiellement verticalement normalement en mode de transport vers des côtés opposés, le corps de roulement (2, 4) étant à suspendre d'un côté avec respectivement un galet de roulement (28) au rail de guidage (30).

4. Moyen de transport selon la revendication 3, **caractérisé en ce que** sur la partie de cadre (26) oblongue du corps de roulement (2, 4) sont disposés des moyens de couplage à friction (36) pour le couplage à friction du corps de roulement (2, 4) respectif avec un moyen de transport (1) mobile de manière guidée le long du rail de guidage (30) et relatif à l'entraînement par friction le long de la voie de transport de la bande de friction (34) prévue.

5. Moyen de transport selon la revendication 4, **caractérisé en ce que** le corps de roulement (2, 4) présente des moyens de déconnexion (38) qui provoquent en cas d'embouteillage des moyens de transport sur la voie de transport une suppression ou au moins une réduction du couplage à friction des moyens de couplage à friction (36) avec la bande de friction (34), les moyens de déconnexion (38) entrant en interaction les uns avec les autres lorsque les corps de roulement (2, 4) contigus des moyens de transport (1) consécutifs s'embouteillent.

6. Moyen de transport selon l'une quelconque des revendications précédentes, **caractérisé en ce qu'**il présente au moins deux corps de roulement (2, 4) mobiles en suspension l'un derrière l'autre à un rail de guidage (30) concerné et reliés l'un à l'autre qui portent ensemble le corps de réception de charge (6).

7. Moyen de transport selon la revendication 6, **caractérisé en ce que** le corps de réception de charge (6) présente une barre de retenue (12) oblongue retenue à l'aide de la poutre en porte-à-faux (10), s'étendant le long en particulier parallèlement à une ligne de jonction la plus courte entre les corps de roulement (2, 4), laquelle forme la partie de suspension (18).

8. Moyen de transport selon la revendication 7, **caractérisé en ce que** le corps de réception de charge (6) présente un élément de liaison (8) reliant l'un à l'autre les corps de roulement (2, 4) et **en ce que** la barre de retenue (12) s'étend le long, à côté, en particulier au moins approximativement parallèlement à l'élément de liaison (8), est reliée par un ensemble de poutre en porte-à-faux (10) à l'élément de liaison (8) et est soutenue par l'ensemble de poutre en porte-à-faux (10) de telle sorte qu'elle soit libre en continu sur son côté supérieur (14) sur toute sa longueur.

9. Moyen de transport selon l'une quelconque des revendications 6 à 8, **caractérisé en ce que** les corps de roulement (2, 4) sont fixés de manière mobile en rotation sur le corps de réception de charge (8).

10. Moyen de transport selon l'une quelconque des revendications 6 à 9, **caractérisé en ce que** la barre de retenue (12) présente à proximité de l'une de ses extrémités longitudinales, une saillie (24) dépassant en particulier vers le haut servant de butée de glissement pour des crochets (20) des supports de produits à transporter (22).

11. Moyen de transport selon la revendication 10, **caractérisé en ce que** la barre de retenue (12) présente également à proximité de l'autre extrémité longitudinale une saillie (24) dépassant en particulier vers le haut servant de butée de glissement pour des crochets de supports de produits de transport.

12. Moyen de transport selon l'une quelconque des revendications précédentes, **caractérisé en ce qu'**il présente au moins une butée de glissement (44) réglable comme élément de limitation à utiliser au choix pour la partie de suspension (18).

13. Moyen de transport selon la revendication 12, **caractérisé en ce que** la butée de glissement (44) réglable est un élément disposé en particulier de manière mobile verticalement sur l'élément de liaison (8) ou sur le corps de roulement (2, 4) entre une position de passage et une position de butée, lequel est retiré dans sa position de passage de la barre de retenue (12) de sorte qu'il ne forme pas d'obstacle pour des crochets (20) glissant sur la barre de retenue (12), et qui est amené dans sa position de butée près de la barre de retenue (12) afin de former un barrage pour des crochets (20) glissant sur la barre de retenue (12).

14. Moyen de transport selon l'une quelconque des revendications précédentes, **caractérisé en ce que** les moyens de transport peuvent être assemblés les uns aux autres pour former des groupes de moyen de transport manipulables ensemble de sorte que les parties de suspension (18) de moyens de transport contigus se raccordent les unes aux autres directement avec leurs extrémités longitudinales.

15. Moyen de transport selon l'une quelconque des revendications précédentes, **caractérisé en ce qu'**il présente sur les extrémités longitudinales de la partie de suspension (18) des parties de chevauchement (52, 54) formées de manière complémentaire l'une à l'autre sur des côtés latéraux opposés de la partie de suspension (18), qui permettent un chevauchement latéral avec des parties de chevauchement (54, 52) concernées de moyens de transport (1L, 1R) suivants consécutifs dans un embouteillage de moyens de transport.
